# EUROPÄISCHE PATENTSCHRIFT

(11) **EP 1 672 242 B1**
(45) Veröffentlichungstag und Bekanntmachung des Hinweises auf die Patenterteilung: **01.12.2010**
(21) Anmeldenummer: 05023521.7
(22) Anmeldetag: 27.10.2005
(51) Int. Cl.: F16F 1/373, F16F 13/08

(54) **Aggregatelager**
Engine support
Support de moteur

(30) Priorität: 16.12.2004 DE 102004060499
(43) Veröffentlichungstag der Anmeldung: 21.06.2006
(73) Patentinhaber: Carl Freudenberg KG, 69469 Weinheim (DE)
(72) Erfinder: Hettler, Werner, 68309 Mannheim (DE)

(56) Entgegenhaltungen:
- EP-A- 0 896 168
- EP-A- 0 957 286
- EP-A- 1 336 771
- DE-A1- 10 024 535
- DE-A1- 10 230 933
- DE-A1- 19 537 462
- US-A1- 2003 127 783

## Beschreibung

### Technisches Gebiet

Die Erfindung betrifft Aggregatelager mit einem Auflager und einem Traglager, die durch einen Federkörper aus elastomerem Werkstoff verbunden sind, wobei das Auflager einen Bügel aufweist, der das Traglager und den Federkörper, im Querschnitt betrachtet U-förmig umschließt.

### Stand der Technik

Ein derartiges Aggregatelager ist aus der DE 100 24 535 A1 bekannt. Das bekannte Aggregatelager weist ein Auflager und einen Federkörper aus einem elastischen Werkstoff auf, die eine Arbeitskammer und eine Ausgleichskammer begrenzen. Die Arbeitskammer und die Ausgleichskammer sind durch eine Trennwand voneinander getrennt, mit Dämpfungsflüssigkeit gefüllt und durch einen Dämpfungskanal strömungsleitend miteinander verbunden. Der Federkörper wird von einem im Querschnitt betrachtet U-förmigen Bügel umschlossen, wobei der Bügel auf dem Auflager befestigt ist. Der Bügel begrenzt die Federwege in Fahrzeug X- und Z-Richtung und erhöht die Steifigkeit des Aggregatelagers.

Aus der gattungsbildenden DE 102 30 933 A1 ist ein Aggregatelager der oben genannten Art bekannt, bei dem das Auflager einen Bügel aufweist, der das Tragelager und den Federkörper U-förmig umschließt.

### Darstellung der Erfindung

Der Erfindung liegt die Aufgabe zugrunde, das vorbekannte Aggregatelager so weiterzuentwickeln, dass es kostengünstig und einfach herstellbar ist und dass es geeignet ist, hohe Kräfte aufzunehmen.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist der Dämpfungskanal einstückig in das Auflager eingeformt. Durch die einstückige und materialeinheitliche Konstruktion von Bügel und Auflager wird eine hohe Stabilität und Steifigkeit des Auflagers erzielt. Da es eine einteilige Konstruktion ist, weist das Aggregatelager wenig Einzelteile auf und die Montage- und Werkzeugkosten sinken. Das Auflager mit dem Bügel kann als komplettes Bauteil beispielsweise im Druckguss-Verfahren hergestellt werden.
Durch die hohe Steifigkeit des Bügels ist das Aggregatelager sehr gut für den Einsatz in einem Frontantriebsfahrzeug geeignet, da das Auflager durch den Bügel eine hohe Steifigkeit besitzt und einwirkende Kräfte durch die hohen Antriebsmomente oder bei einem möglichen Unfall durch das Gehäuse abgestützt werden können. Die bei einer zweiteiligen Konstruktion erforderliche gesonderte stabile Verbindung zweier Bauteile entfällt. Die Arbeitskammer kann zusätzlich zum Dämpfungskanal mit einem Tilgerkanal hydraulisch verbunden sein. Wenn der Frequenzbereich der hydraulischen Dämpfung überschritten ist, verharrt die Flüssigkeitssäule durch ihre Massenträgheit im langen Dämpfungskanal. Das durch Einfedern des Lagers verdrängte

Flüssigkeitsvolumen kann dann nur noch durch das Blähvermögen des Tragkörpers aufgenommen werden und führt deshalb zu hoher dynamischer Verhärtung des Lagers. Der kürzere Tilgerkanal reduziert die dynamische Federrate des Aggregatelagers im abgestimmten Frequenzbereich. Der Querschnitt und die Länge des Tilgerkanals kann elektronisch oder pneumatisch verändert werden. Der Tilgerkanal ist, ebenso wie der Dämpfungskanal, ohne Einsatz zusätzlicher Bauteile und damit zusätzlicher Fertigungsschritte in dem Auflager angeordnet. Ein zusätzlicher Tilgerkanal verursacht daher nur wenig zusätzliche Kosten.

Das Traglager kann als Kern ausgebildet sein. Ein als Kern ausgebildetes Traglager kann sicher und einfach im elastomeren Federkörper eingebettet werden.

Der Kern kann, im Querschnitt betrachtet, vom elastomeren Werkstoff des Federkörpers umschlossen sein. Dadurch ist der Kern gegen Beschädigungen geschützt. Insbesondere wird ein direkter Kontakt zwischen dem metallischen Kern und dem metallischen Bügel vermieden, was zu Lärmentwicklung und vorzeitiger Beschädigung beider Teile führen kann.

Der Bügel kann auf der dem Traglager und dem Federkörper zugewandten Seite mit einer Beschichtung aus elastomerem Werkstoff versehen sein. Die zusätzliche Beschichtung bestimmt mit der Anschlagkontur den Progressionsverlauf der Anschläge. Die zusätzliche Beschichtung verhindert weiterhin sicher, dass der metallische Kern, wenn er nicht vom Federkörper umschlossen ist, auf dem metallischen Bügel anschlägt, was zu Lärmentwicklung und einem vorzeitigen Verschleiß führt.

Die Beschichtung und der Federkörper können einstückig und materialeinheitlich ausgebildet sein. Die Beschichtung und der Federkörper können in dem gleichen Arbeitsgang hergestellt und in dem Auflager befestigt werden. Dadurch wird die Anzahl der Teile und die Anzahl der Fertigungsschritte weiter reduziert und dadurch werden die Herstellungskosten gesenkt.

Das Traglager und/oder der Federkörper können auf der Oberseite mit einem Zuganschlag und im Querschnitt betrachtet, seitlich mit Queranschlägen versehen sein. Bei einem Einsatz des Aggregatelagers beispielsweise in einem Frontantriebsfahrzeug kann das Aggregatelager die hohen Kräfte des Antriebsmomentes abstützen. Diese Abstützfunktion erfordert am Traglager und/oder am Federkörper großvolumige Anschläge, welche die auftretenden Kräfte über das Auflager ableiten. Diese Anschläge aus elastomeren Werkstoff können entweder auf dem Traglager oder auf dem Federkörper angebracht sein.

Der Bügel kann auf der dem Tragkörper und dem Federkörper abgewandten Außenseite Verstärkungsrippen aufweisen. Die Verstärkungsrippen vergrößern die Steifigkeit des Bügels und damit des gesamten Aggregatelagers.
Das Auflager und der Federkörper begrenzen eine Arbeitskammer und eine Ausgleichskammer, die beide mit Dämpfungsflüssigkeit gefüllt sind. Die Arbeitskammer und die Ausgleichskammer sind durch eine Trennwand voneinander getrennt und durch einen Dämpfungskanal strömungsleitend miteinander verbunden. Hydraulische Aggregatelager kommen zum Einsatz, wenn die Anforderungen an die Schwingungsdämpfung größer sind. Sie werden insbesondere zur Dämpfung von Motorschwingungen in Kraftfahrzeugen eingesetzt.

Die, in der Draufsicht betrachtet, radial nach außen gerichteten Wandung des Tilgerkanals ist zumindest teilweise aus einem elastomeren Werkstoff gebildet. Durch die elastomere Wandung in Verbindung mit Tilgerkanallänge und - querschnitt wird die Frequenzlage des Tilgers bestimmt. Die elastomere Wandung kann gemeinsam mit dem Federkörper und der elastomeren Beschichtung des Auflagers einstückig und materialeinheitlich ausgeführt werden. Dadurch wird die Anzahl der Fertigungsschritte und die Anzahl der Bauteile reduziert.

Die Trennwand kann als Düsenkäfig ausgebildet sein, der zwei Düsenscheiben und eine zwischen den Düsenscheiben angeordnete Membran umfasst. Der Düsenkäfig mit Membran dient der akustischen Entkopplung hochfrequenter Schwingungen mit kleinen Amplituden. Um nachteilige Beeinflussung auszuschließen, kann es vorteilhaft sein, nur den Tilgerkanal oder die oben genannte akustische Entkopplung vorzusehen.

Die Ausgleichskammer kann auf der der Arbeitskammer axial abgewandten Seite durch einen Rollbalg begrenzt sein und der Rollbalg kann mit einstückig und materialeinheitlich mit dem Auflager verbundenen Krallen flüssigkeitsdicht an dem Auflager befestigt sein. Wenn eine Gefährdung des Rollbalges ausgeschlossen ist kann bei entsprechender Ausgestaltung der Rollbalgeinspannung auf den abschließenden Deckel verzichtet und somit ein weiteres Bauteil eingespart werden. Da die Krallen einstückig und materialeinheitlich am Traglager befestigt sind, werden zur flüssigkeitsdichten Befestigung des Rollbalgs keine zusätzlichen Bauteile benötigt.

### Kurzbeschreibung der Zeichnungen

Einige Ausführungsbeispiele der erfindungsgemäßen Aggregatelagers werden nachfolgend anhand der Figuren näher erläutert. Es zeigen, jeweils in schematischer Darstellung:
- Fig. 1: ein hydraulisches Aggregatelager im Querschnitt;
- Fig. 2: ein Aggregatelager ohne Schutzdeckel für den Rollbalg;
- Fig. 3: ein Aggregatelager mit einem Düsenkäfig als Trennwand;
- Fig. 4: das Aggregatelager nach Figur 1 in geschnittener Seitenansicht;
- Fig. 5: das Aggregatelager nach Figur 1 in der Untersicht.

### Ausführung der Erfindung

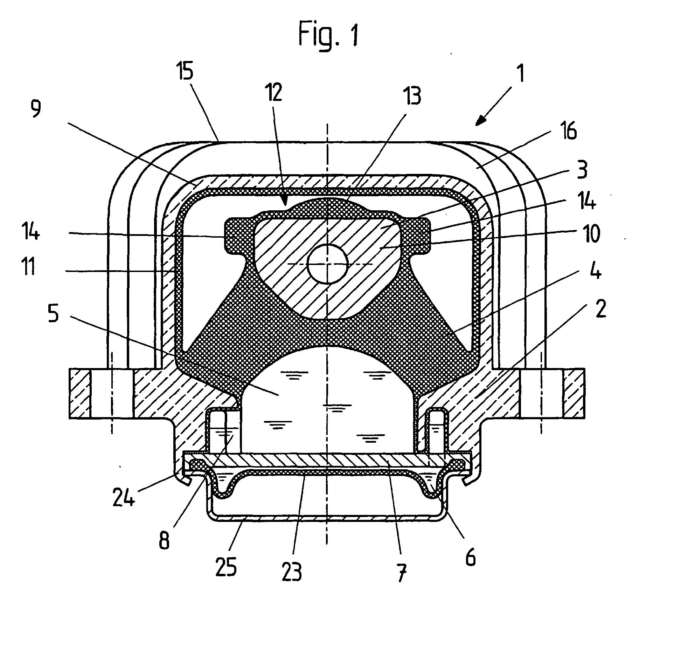

Figur 1 zeigt ein hydraulisch dämpfendes Aggregatelager 1, welches aus einem Auflager 2 und einem Traglager 3 besteht, die durch einen Federkörper 4 aus elastomerem Werkstoff verbunden sind. Das Traglager 3 ist durch einen Kern 10 gebildet, wobei der Kern 10 vom Federkörper 4 vollständig umschlossen ist. Auf der Oberseite 12 des Traglagers 3 befindet sich ein Zuganschlag 13 aus einem elastomeren Werkstoff, der materialeinheitlich mit dem Federkörper 4 ausgeführt ist. Auf beiden Seiten des Kerns 10 befindet sich je ein Queranschlag 14, die ebenfalls materialeinheitlich mit dem Federkörper ausgeführt sind. Der Federkörper 4 und das Auflager 2 begrenzen eine Arbeitskammer 5 und eine Ausgleichskammer 6, die beide mit Dämpfungsflüssigkeit gefüllt sind. Die Arbeitskammer 5 und die Ausgleichskammer 6 sind durch eine Trennwand 7 voneinander getrennt und durch einen Dämpfungskanal 8 strömungsleitend miteinander verbunden. Der Dämpfungskanal 8 ist auf seiner Innenseite mit einer zusätzlichen Beschichtung 26 versehen. Die Ausgleichskammer 6 ist auf der der Arbeitskammer 5 axial abgewandten Seite durch einen Rollbalg 23 begrenzt. Der Rollbalg 23 ist zum Schutz vor Beschädigung auf der der Trennwand 7 axial abgewandten Seite durch einen Deckel 25 abgedeckt. Der Deckel 25 ist mit einstückig und materialeinheitlich mit dem Auflager 2 verbundenen Krallen 24 an dem Auflager 2 befestigt und presst den Rollbalg 23 flüssigkeitsdicht an das Auflager 2 an. Das Auflager 2 weist einen Bügel 9 auf, der einstückig und materialeinheitlich mit dem Auflager 2 verbunden ist. Der Bügel 9 umschließt den Kern 10 und den Federkörper 4 U-förmig. Der Bügel 9 ist auf der dem Traglager 3 und dem Federkörper 4 zugewandten Seite mit einer Beschichtung 11 aus elastomerem Werkstoff versehen. Die Beschichtungen 11 und 26 sowie der Federkörper 4 sind materialeinheitlich und einstückig ausgeführt. Auf der dem Traglager 3 abgewandten Außenseite 15 des Bügels 9 sind Verstärkungsrippen 16 angeordnet, die materialeinheitlich und einstückig mit dem Bügel 9 und dem Auflager 2 ausgeführt sind.

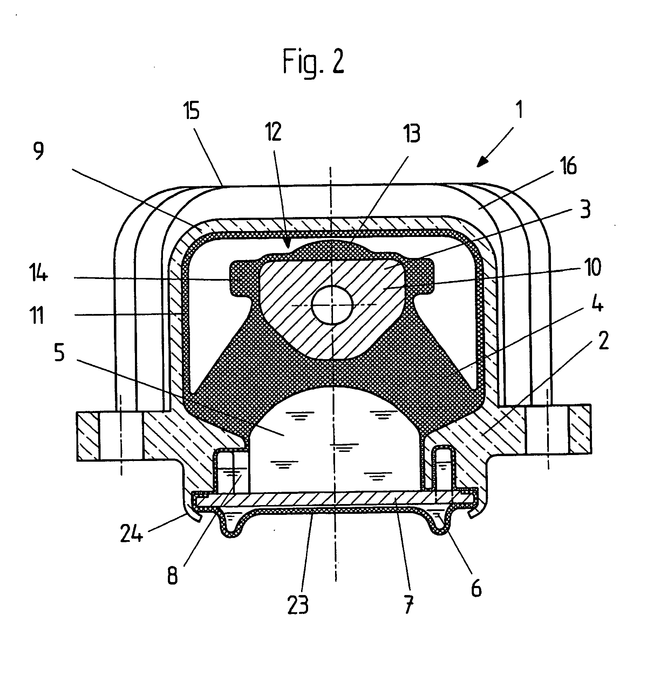

Figur 2 zeigt ein Aggregatelager gemäß Figur 1. In diesem Ausführungsbeispiel liegen die Krallen 24 allerdings direkt an dem Rollbalg 23 an und pressen den Rollbalg 23 flüssigkeitsdicht an das Auflager 2 an.

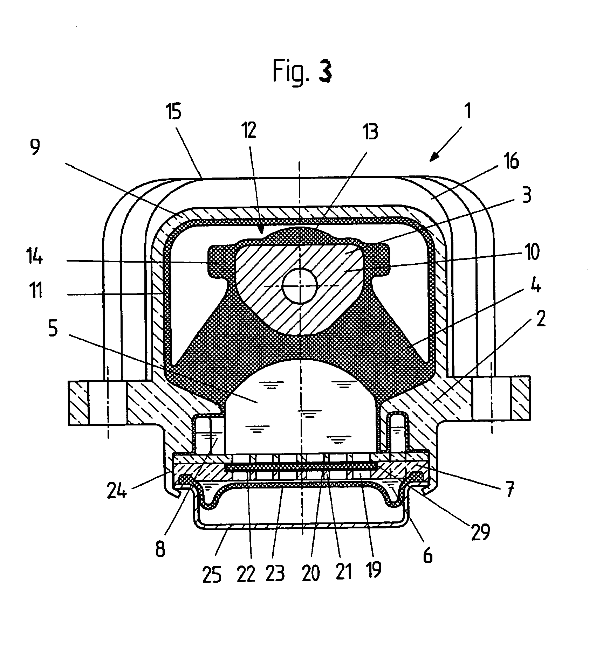

Figur 3 zeigt ein Aggregatelager gemäß Figur 1. In diesem Ausführungsbeispiel ist die Trennwand 7 durch einen Düsenkäfig 19 gebildet, der sich aus einer oberen Düsenscheibe 20 und einer unteren Düsenscheibe 21 zusammensetzt. In der unteren Düsenscheibe 21 befindet sich eine Ausnehmung 29. In der Ausnehmung 29 befindet sich eine innerhalb der Ausnehmung 29 frei bewegliche Membran 22. Die Ausnehmung 29 ist auf der dem Arbeitsraum 5 zugewandten Seite durch die oberen Düsenscheibe 20 abgedeckt. Dadurch ist die Membran 22 zwischen den Düsenscheiben 20,21 eingeschlossen.

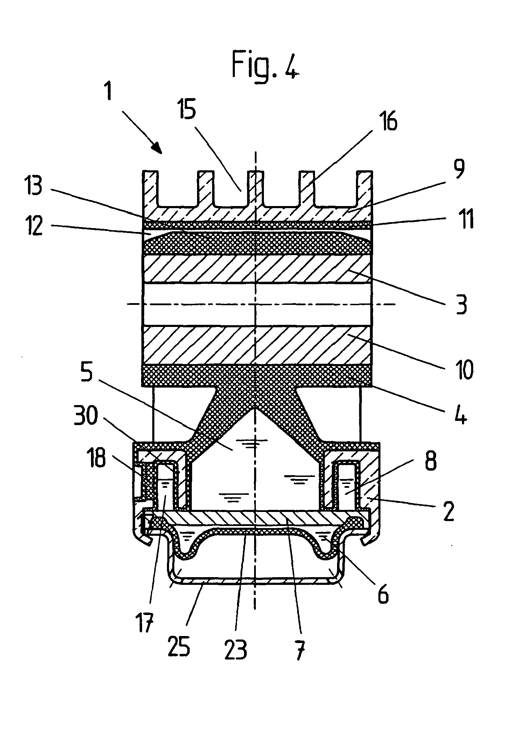

Figur 4 zeigt das in Figur 1 beschriebene Aggregatelager in einer Seitenansicht. In dieser Ansicht ist zusätzlich zu dem Dämpfungskanal 8 ein Tilgerkanal 17 zu erkennen. Der Tilgerkanal 17 stellt eine Sackgasse ausgehend von der Arbeitskammer 5 dar. Der Tilgerkanal ist, wie auch der Dämpfungskanal 8 einstückig in das Auflager 2 eingeformt. Der Tilgerkanal 17 ist ebenso wie der Dämpfungskanal 8 mit einer weiteren Beschichtung 30 ausgekleidet. Die weitere Beschichtung 30 ist mit der zusätzlichen Beschichtung 26, dem Federkörper 4 und der Beschichtung 11 materialeinheitlich und einstückig ausgeführt. Die in das Auflager 2 eingeformte Wandung 18 des Tilgerkanals 17 ist in einem Teilstück geöffnet. Die Wandung 18 wird an dieser Stelle durch die weitere Beschichtung 30 gebildet. Die Wandung 18 ist an dieser Stelle elastisch und bildet eine Blähfeder, mit der die Frequenzlage des Tilgerkanals 17 eingestellt werden kann.

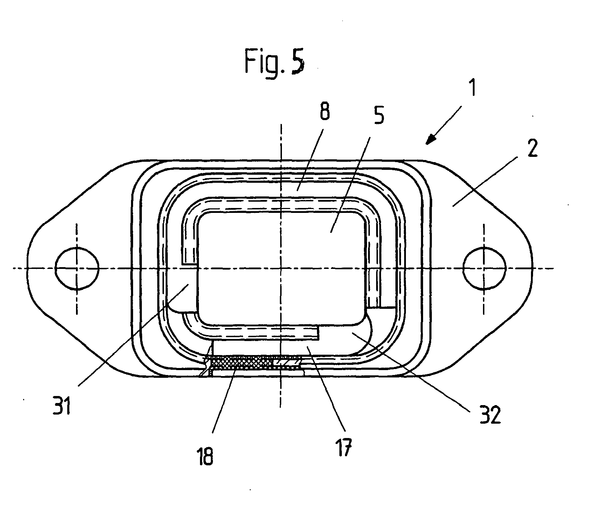

Figur 5 zeigt das in Figur 1 abgebildete Aggregatelager in der Untersicht. In der Ansicht ist der Deckel 25, der Rollbalg 23 und die Trennwand 7 nicht abgebildet. Der Dämpfungskanal 8 und der Tilgerkanal 17 besitzen je eine Öffnung 31,32, durch die der Dämpfungskanal 8 und der Tilgerkanal 17 mit dem Arbeitsraum 5 verbunden sind. Der lange Dämpfungskanal 8 und der kürzere Tilgerkanal 17 verlaufen ringförmig um den Arbeitsraum 5. Beide Kanäle 8, 17 sind materialeinheitlich in das Auflager 2 eingeformt und können in einem Arbeitsgang gemeinsam mit dem Auflager 2 hergestellt werden. In dem Teilschnitt ist die Wandung 18 des Tilgerkanals 17 aus elastomerem Werkstoff abgebildet.

## Patentansprüche

1. Aggregatelager (1), umfassend ein Auflager (2) und ein Traglager (3), die durch einen Federkörper (4) aus elastomeren Werkstoff verbunden sind, wobei das Auflager (2) einen Bügel (9) aufweist, der das Traglager (3) und den Federkörper (4), im Querschnitt betrachtet U-förmig umschließt, wobei das Auflager (2) und der Bügel (9) einstückig und materialeinheitlich ausgeführt sind und wobei das Auflager (2) und der Federkörper (4) eine Arbeitskammer (5) und eine Ausgleichskammer (6) begrenzen, die beide mit Dämpfungsflüssigkeit gefüllt sind, wobei die Arbeitskammer (5) und die Ausgleichskammer (6) durch eine Trennwand (7) voneinander getrennt und durch einen Dämpfungskanal (8) strömungsleitend miteinander verbunden sind, **dadurch gekennzeichnet, dass** der Dämpfungskanal (8) einstückig in das Auflager (2) eingeformt ist.

2. Aggregatelager nach Anspruch 1, **dadurch gekennzeichnet, dass** das Traglager (3) als Kern (10) ausgebildet ist.

3. Aggregatelager nach Anspruch 1 oder 2, **dadurch gekennzeichnet, dass** der Kern (10), im Querschnitt betrachtet, vom elastomeren Werkstoff des Federkörpers (4) umschlossen ist.

4. Aggregatelager nach einem der Ansprüche 1 bis 3, **dadurch gekennzeichnet, dass** der Bügel (9) auf der dem Traglager (3) und dem Federkörper (4) zugewandten Seite mit einer Beschichtung (11) aus elastomerem Werkstoff versehen ist.

5. Aggregatelager nach Anspruch 4, **dadurch gekennzeichnet, dass** die Beschichtung (11) und der Federkörper (4) einstückig und materialeinheitlich ausgebildet sind.

6. Aggregatelager nach einem der Ansprüche 1 bis 5, **dadurch gekennzeichnet, dass** das Traglager (3) und/oder der Federkörper (4) auf der Oberseite (12) mit einem Zuganschlag (13) und im Querschnitt betrachtet, seitlich mit Queranschlägen (14) versehen ist.

7. Aggregatelager nach einem der Ansprüche 1 bis 6, **dadurch gekennzeichnet, dass** der Bügel (9) auf der dem Traglager (3) und dem Federkörper (4) abgewandten Außenseite (15) Verstärkungsrippen (16) aufweist.

8. Aggregatelager nach Anspruch 1, **dadurch gekennzeichnet, dass** die Arbeitskammer (5) zusätzlich zum Dämpfungskanal (8) mit einem Tilgerkanal (17) hydraulisch verbunden ist.

9. Aggregatelager nach Anspruch 8, **dadurch gekennzeichnet, dass** die, in der Draufsicht betrachtet, radial nach außen gerichtete Wandung (18) des Tilgerkanals (17) zumindest teilweise aus einem elastomeren Werkstoff gebildet ist.

10. Aggregatelager nach einem der Ansprüche 1 oder 8 bis 9, **dadurch gekennzeichnet, dass** die Trennwand (7) als Düsenkäfig (19) ausgebildet ist, umfassend zwei Düsenscheiben (20,21) und eine zwischen den Düsenscheiben (20,21) angeordnete Membran (22).

11. Aggregatelager nach einem der Ansprüche 1 oder 8 bis 10, **dadurch gekennzeichnet, dass** die Ausgleichskammer (6) auf der der Arbeitskammer (5) axial abgewandten Seite durch einen Rollbalg (23) begrenzt ist, wobei der Rollbalg (23) mit einstückig und materialeinheitlich mit dem Auflager (2) verbundenen Krallen (24) flüssigkeitsdicht an dem Auflager (2) befestigt ist.

## Claims

1. Assembly mounting (1), comprising a support (2) and a supporting bearing (3), which are connected by a spring body (4) made of elastomeric material, wherein the support (2) has a bracket (9) which surrounds the supporting bearing (3) and the spring body (4) in a U-shaped manner, as seen in cross section, wherein the support (2) and the bracket (9) are formed integrally and from the same material, and wherein the support (2) and the spring body (4) delimit a working chamber (5) and an equalizing chamber (6) which are both filled with damping fluid, wherein the working chamber (5) and the equalizing chamber (6) are separated from each other by a partition (7) and are connected to each other in a flow-conducting manner by means of a damping duct (8), **characterized in that** the damping duct (8) is moulded integrally into the support (2).

2. Assembly mounting according to Claim 1, **characterized in that** the supporting bearing (3) is designed as a core (10).

3. Assembly mounting according to Claim 1 or 2, **characterized in that** the core (10), as viewed in cross section, is surrounded by the elastomeric material of the spring body (4).

4. Assembly mounting according to one of Claims 1 to 3, **characterized in that** the bracket (9) is provided on the side facing the supporting bearing (3) and the spring body (4) with a coating (11) made from elastomeric material.

5. Assembly mounting according to Claim 4, **characterized in that** the coating (11) and the spring body (4) are formed integrally and from the same material.

6. Assembly mounting according to one of Claims 1 to 5, **characterized in that** the supporting bearing (3) and/or the spring body (4) are/is provided on the upper side (12) with a tensile stop (13) and literally, as viewed in cross section, with transverse stops (14).

7. Assembly mounting according to one of Claims 1 to 6, **characterized in that** the bracket (9) has reinforcing ribs (16) on the outer side (15) which faces away from the supporting bearing (3) and the spring body (4).

8. Assembly mounting according to Claim 1, **characterized in that** the working chamber (5) is hydraulically connected to an absorption duct (17) in addition to the damping duct (8).

9. Assembly mounting according to Claim 8, **characterized in that that** wall (18) of the absorption duct (17) which is directed radially outwards, as seen in top view, is at least partially formed from an elastomeric material.

10. Assembly mounting according to one of Claims 1 or 8 to 9, **characterized in that** the partition (7) is designed as a nozzle cage (19) comprising two nozzle discs (20, 21) and a diaphragm (22) arranged between the nozzle discs (20, 21).

11. Assembly mounting according to one of Claims 1 or 8 to 10, **characterized in that** the equalizing chamber (6) is bounded on the side facing away axially from the working chamber (5) by a rolling bellows (23), the rolling bellows (23) being fastened to the support (2) in a liquid-tight manner by claws (24) which are connected integrally to and are formed from the same material as the support (2).

## Revendications

1. Support d'unité (1), comprenant un appui (2) et un palier de support (3) lesquels sont connectés par un corps de ressort (4) en matériau élastomère, l'appui (2) présentant une bride (9), qui entoure le palier de support (3) et le corps de ressort (4) en forme de U, vu en section transversale, l'appui (2) et la bride (9) étant réalisés d'une seule pièce et venus de matière, l'appui (2) et le corps de ressort (4) délimitant une chambre de travail (5) et une chambre de compensation (6), qui sont toutes les deux remplies de fluide d'amortissement, la chambre de travail (5) et la chambre de compensation (6) étant séparées l'une de l'autre par une cloison (7) et étant connectées l'une à l'autre de manière à conduire l'écoulement par un canal d'amortissement (8), **caractérisé en ce que** le canal d'amortissement (8) est façonné d'une seule pièce dans l'appui (2).

2. Support d'unité selon la revendication 1, **caractérisé en ce que** le palier de support (3) est réalisé sous forme de noyau (10).

3. Support d'unité selon la revendication 1 ou 2, **caractérisé en ce que** le noyau (10), vu en section transversale, est entouré de matériau élastomère du corps de ressort (4).

4. Support d'unité selon la revendication 1 à 3, **caractérisé en ce que** la bride (9) est pourvue du côté tourné vers le palier de support (3) et le corps de ressort (4) d'un revêtement (11) en matériau élastomère.

5. Support d'unité selon la revendication 4, **caractérisé en ce que** le revêtement (11) et le corps de ressort (4) sont réalisés d'une seule pièce et venus de matière.

6. Support d'unité selon l'une quelconque des revendications 1 à 5, **caractérisé en ce que** le palier de support (3) et/ou le corps de ressort (4) sont pourvus du côté supérieur (12), d'une butée de traction (133), et, vu en section transversale, sont pourvus latéralement de butées transversales (14).

7. Support d'unité selon l'une quelconque des revendications 1 à 6, **caractérisé en ce que** la bride (9) présente, du côté extérieur (15) opposé au palier de support (3) et au corps de ressort (4), des nervures de renforcement (16).

8. Support d'unité selon la revendication 1, **caractérisé en ce que** la chambre de travail est connectée hydrauliquement à un canal d'absorbeur (17).

9. Support d'unité selon la revendication 8, **caractérisé en ce que** la paroi (18) du canal d'absorbeur (17) orientée radialement vers l'extérieur, considérée en vue de dessus, est formée au moins en partie d'un matériau élastomère.

10. Support d'unité selon l'une quelconque des revendications 1 ou 8 à 9, **caractérisé en ce que** la cloison (7) est réalisée sous forme de cage à buse (19) , comprenant deux disques de buse (20, 21) et une membrane (22) disposée entre les disques de buse (20, 21).

11. Support d'unité selon l'une quelconque des revendications 1 ou 8 à 10, **caractérisé en ce que** la chambre de compensation (6) est limitée du côté opposé axialement à la chambre de travail (5) par un soufflet roulant (23), le soufflet roulant (23) étant fixé de manière étanche aux fluides sur l'appui (2) avec des griffes (24) connectées d'une seule pièce et venues de matière avec l'appui (2).
